# EUROPEAN PATENT SPECIFICATION

(11) **EP 1 589 324 B1**
(45) Date of publication and mention of the grant of the patent: **19.03.2008**
(21) Application number: 04701610.0
(22) Date of filing: 13.01.2004
(51) Int. Cl.: G01F 1/74, G01N 15/02

(54) **HIGH-SENSITIVITY AND HIGH-RESOLUTION DEVICE FOR MEASURING CONCENTRATIONS OF PARTICLES IN CASCADE IMPACTORS**
HOCHEMPFINDLICHE UND HOCHAUFLÖSENDE EINRICHTUNG ZUR MESSUNG VON KONZENTRATIONEN VON PARTIKELN IN KASKADENIMPAKTOREN
DISPOSITIF A HAUTE SENSIBILITE ET HAUTE RESOLUTION SERVANT A MESURER LES CONCENTRATIONS DE PARTICULES DANS LES IMPACTEURS EN CASCADE

(30) Priority: 13.01.2003 ES 200300068
(43) Date of publication of application: 26.10.2005
(73) Proprietor: CENTRO DE INVESTIGACIONES ENERGETICAS MEDIOAMBIENTALES Y TECNOLOGICAS (C.I.E.M.A.T.), E-28040 Madrid (ES)
(72) Inventor: MARTIN ESPIGARES, Manuel, E-28015 Madrid (ES); GOMEZ MORENO, Francisco, Javier, E-28922 Alcorcon (ES)
(74) Representative: Garcia-Cabrerizo y del Santo, Pedro Maria
(86) International application number: PCT/ES2004/000011
(87) International publication number: WO 2004/063677

(56) References cited:
- WO-A1-02/18910
- WO-A2-99/41585
- GB-A- 2 374 671
- US-A- 3 279 028
- US-A- 3 939 694
- KESKINEN J ET AL: "Electrical calibration method for cascade impactors" J. AEROSOL SCIENCE, vol. 30, no. 1, January 1999 (1999-01), pages 111-116, Elsevier, GB
- KESKINEN J ET AL: "Electrical low pressure impactor" J. AEROSOL SCIENCE, vol. 23, no. 4, June 1992 (1992-06), pages 353-360, Elsevier, GB
- GOMEZ-MORENO F J ET AL: "Turbulent transition in impactor jets and its effects on impactor resolution" J. AEROSOL SCIENCE, vol. 33, no. 3, March 2002 (2002-03), pages 111-116, Elsevier, GB

## Description

### Object of the Invention

The present invention refers to a device which allows for increasing the sensitivity and resolution during the measurement of particle size distributions using cascade impactors provided with high-sensitivity electrometers in every stage of the impactor.

### Background of the Invention

Environmental reference levels are becoming more and more strict and it is necessary to develop instruments sensitive enough to detect, in real time, the new limits imposed by legislation for the immission measurements in the case of particulate material. To overcome this problem, high-volume cascade impactors have traditionally been used for the purpose of taking a sufficient sample and being able to weigh it with microscales. However, electrometers are much more sensitive systems than microscales, constituting true in-line detectors which have already been used previously in emission measurements, for example in triboelectric devices based on very different foundations than impactors, of a lower sensitivity and in which the insulating material used is not determinant (German patent DE 169 34 384 A1).

In one stage of a cascade impactor, the gas flow entraining the particles passes through the nozzles and is obliged to avoid the collector. The smaller particles of a critical size, the cut diameter, will follow the air streams hitting in the collector. When the particles which hit are charged, their impingement rate in the collector can be inferred from the current which it receives. By knowing the average number of charges in the particle, it is possible to measure the particle concentration from the measured current. It is appropriate to introduce the stage in a Faraday box to prevent ambient noise, or to design the stage as a Faraday box itself.

One stage of a cascade impactor can be used to classify particles that are smaller and larger than the cut diameter. By installing several stages in tandem with consecutive decreasing cut diameters, it is possible to measure the particle size distribution and their concentration. As the gas sequentially flows through the stages, the particles retained in each collector are those which are smaller than the cut diameter of the prior stage and greater than the cut diameter of the stage itself. This sequential classification divides the distribution of particles into a series of continuous groups according to their size.

The main limitation of the systems used up until now is due to the use of plastics as the insulating material. These plastics have two drawbacks. The first one occurs due to the fact that they are piezoelectric materials, as a result of which the lower detection limit of the electrometer is limited by the noise generated by the pump necessary for the sampling (of Juan et al. (1997) J. Aerosol Sci., 28, 1029-1048). The second problem is the electrostatic losses (patent WO 99/37990), since plastic materials accumulate charges causing an electrical field and precipitate the charged particles. This means that not all the particles will reach the suitable collector to measure them. This problem more seriously affects the smaller particles, which must pass through the first stages of the impactor before being retained and they also have a higher electrical mobility.

On the other hand, turbulence is a mechanism which deteriorates the resolution of an impactor due to the fact that the temporary variations of the speed of the fluid lead to a temporary widening in the section size (Gómez-Moreno et al. (2002) J. Aerosol Science, 33, 459-476). Free jets are naturally unstable. Particularly, for the case of geometries with abrupt accelerations (such as those resulting from perforating a flat plate), this instability occurs even at Reynolds numbers (based on the mean speed and the diameter of the jet) as low as 100. However, a jet frontally colliding with a surface tends to become stabilized due to the presence of the surface (the collector in the case of inertial impactors). Therefore, at a given Reynolds number, longer jet lengths (larger distances from the nozzle to the collector) tend to cause the transition to turbulence more than the small distances, in a manner similar to the destabilizing effect of increasing the Reynolds number. In standard impactors, the use of high flow rates is necessary in order to obtain enough sample. This means that the Reynolds number in the nozzles can reach very high values and cause turbulence in the jet, which considerably reduces the quality of the measurement.

It has been checked that both drawbacks can be overcome by means of the almost exclusive use of conductive materials, with the insertion of small pieces of sapphire as an insulating material, and additionally by the use of short jets obtained by setting the distance of the nozzle to the collector at a value similar to the nozzle diameter.

### Description of the Invention

The device of the invention is based on a cascade impactor in which the collector of each stage is connected to an electric sensor (for example, a high-sensitivity electrometer) by means of a non piezoelectric material (for example, sapphire) used as an insulator, for the purpose of measuring the concentration of particles retained in that stage. To prevent losses due to internal electrical fields, the entire stage is constructed in a metallic material and constitutes a Faraday box itself, although additional metallic boxes can be used. Furthermore, the sapphire insulators are small and are located in a region far from the path of the particles.

For the purpose of preventing the jet carrying the particles from becoming turbulent, the collector is arranged at a distance downstream from the outlet of the nozzle approximately equal to the diameter of said nozzle. This distance is set using variables suitable for the thickness of the sapphire insulator and the depth of its housing in the collector.

### Brief Description of the Drawings

Figure 1 shows a cascade impactor stage according to the invention, with a first solution for electrically insulating the collector from the rest of the stage.
Figure 2 shows a second possible solution to the problem of connecting the electrometer by means of sapphires without interrupting the Faraday box.

### Detailed Description of a Preferred Embodiment

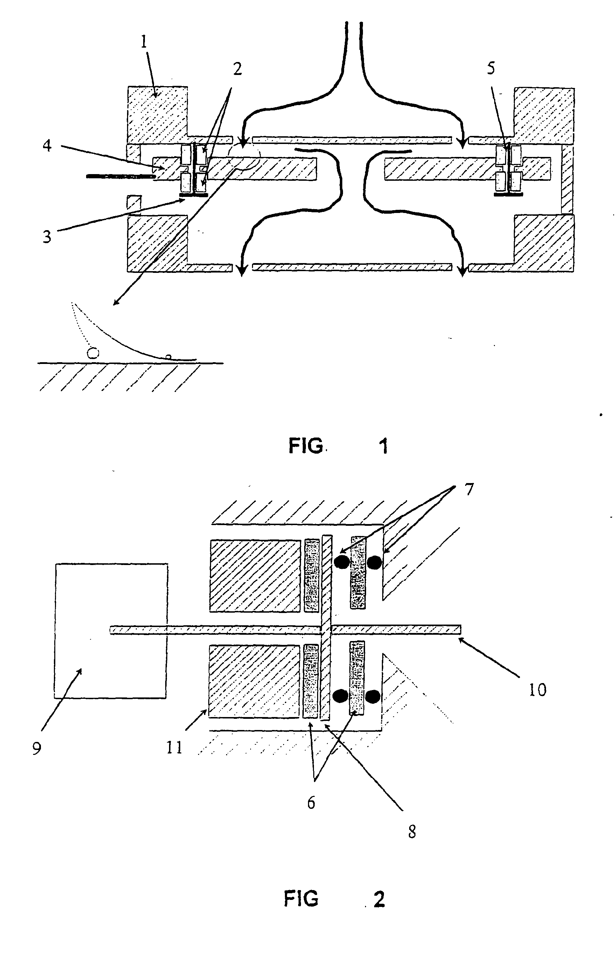

Figure 1 shows a first solution for electrically insulating the collector from the rest of the stage (1) using a double system of sapphire insulators (2); one of them physically separates the collector (4) from the rest of the stage (1), whereas the second one prevents contact of the clamping screw (3) with the collector (4). These sapphire insulators (2) have a central borehole (5) which can be traversed by the clamping screw (3), which screws into the main body of the stage (1).

Figure 2 shows a detail of a second solution for connecting the electrometer to the collector using a double set of sapphire insulators (6), a double set o-ring seals (7) and a separation plate (8) where the conducting wire (10) connecting the electrometer (9) with the collector is welded. The assembly is fixed by a clamping nut (11) pressing against the assembly such that the o-ring seals prevent the inlet of atmospheric gas to the interior (the pressure of which is not necessarily equal to the atmospheric pressure). The electrometer (9) and the first amplification stage are inside a Faraday box, which is independently fixed to the impactor body such that conducting wire (10) connecting the collector (4) with the amplifier of the electrometer (9) is not subjected to excessive stresses or vibrations.

## Claims

1. A high-sensitivity and high-resolution device for measuring particle concentrations in cascade impactors in which, in each stage, the collector, in which the particles hit after passing through a nozzle, is electrically connected to an electric sensor and mechanically joined to each stage **characterized in that** small pieces of non-piezoelectric insulator, as the only insulator element, are inserted electrically insulating the collector from the rest of the stage and **in that** the entire stage is constructed in a metallic material to constitute a Faraday box itself.

2. - A high-sensitivity and high-resolution device for measuring particle concentrations in cascade impactors according to claim 1, **characterized in that** the electric sensor is an electrometer (9) connected to the collector by a conducting wire (10)

3. - A high-sensitivity and high-resolution device for measuring particle concentrations in cascade impactors according to claim 1, **characterized in that the non-piezoelectric insulator is a sapphire (2)**

4. - A high-sensitivity and high resolution device for measuring particle concentrations in cascade impactors according to claim 1, **characterized in that** the distance between the nozzle and the collector is such that the jet remains laminar.

## Patentansprüche

1. Eine hochempfindliche und hochauflösende Vorrichtung zur Messung von Partikelkonzentrationen in Kaskadenimpaktoren, bei denen bei jeder Phase der Sammler, auf den die Partikel treffen, nachdem sie eine Düse passiert haben, elektrisch an einen elektrischen Sensor angeschlossen und mechanisch mit jeder Phase verbunden ist, **dadurch gekennzeichnet, dass** kleine Teile eines nicht piezoelektrischen Isolators als einziges Isolatorelement eingefügt sind, wobei diese den Sammler elektrisch von der restlichen Phase isolieren, und dass die gesamte Phase aus einem metallischen Material gebildet ist, um einen Faradayschen Käfig selbst zu bilden.

2. Eine hochempfindliche und hochauflösende Vorrichtung zur Messung von Partikelkonzentrationen in Kaskadenimpaktoren nach Anspruch 1, **dadurch gekennzeichnet, dass** es sich bei dem elektrischen Sensor um einen Elektrometer (9) handelt, der mittels einem leitenden Kabel (10) an den Sammler angeschlossen ist.

3. Eine hochempfindliche und hochauflösende Vorrichtung zur Messung von Partikelkonzentrationen in Kaskadenimpaktoren nach Anspruch 1, **dadurch gekennzeichnet, dass** es sich bei dem nicht piezoelektrischen Isolator um einen Saphir (2) handelt.

4. Eine hochempfindliche und hochauflösende Vorrichtung zur Messung von Partikelkonzentrationen in Kaskadenimpaktoren nach Anspruch 1, **dadurch gekennzeichnet, dass** der Abstand zwischen der Düse und dem Sammler so ist, dass der Strahl laminar bleibt.

## Revendications

1. Un dispositif haute sensibilité et haute résolution pour mesurer des concentrations en particules dans des impacteurs en cascade dans lequel, à chaque étage, le collecteur, dans lequel les particules frappent après être passées à travers un embout, est connecté électriquement à un capteur électrique et joint mécaniquement à chaque étage **caractérisé en ce que** de petites pièces d'isolant non piézoélectrique, en tant qu'unique élément isolant, sont insérées isolant électriquement le collecteur du reste de l'étage et **en ce que** l'étage tout entier est construit en un matériau métallique pour constituer lui-même une cage de Faraday.

2. Un dispositif haute sensibilité et haute résolution pour mesurer des concentrations en particules dans des impacteurs en cascade selon la revendication 1, **caractérisé en ce que** le capteur électrique est un électromètre (9) connecté au collecteur par un fil conducteur (10).

3. Un dispositif haute sensibilité et haute résolution pour mesurer des concentrations en particules dans des impacteurs en cascade selon la revendication 1, **caractérisé en ce que** l'isolant non piézoélectrique est un saphir (2).

4. Un dispositif haute sensibilité et haute résolution pour mesurer des concentrations en particules dans des impacteurs en cascade selon la revendication 1, **caractérisé en ce que** la distance entre l'embout et le collecteur est telle que le jet reste laminaire.
